Europäisches Patentamt

European Patent Office

Office européen des brevets

(19)

(11) Veröffentlichungsnummer: **0 263 297**
**A2**

(12) **EUROPÄISCHE PATENTANMELDUNG**

(21) Anmeldenummer: 87112631.4

(22) Anmeldetag: 29.08.87

(51) Int. Cl.⁴: **C08G 61/12**

(30) Priorität: 04.09.86 DE 3630071

(43) Veröffentlichungstag der Anmeldung:
13.04.88 Patentblatt 88/15

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Heinze, Juergen, Dr.
Runzstrasse 65
D-7800 Freiburg(DE)
Erfinder: Hinkelmann, Klaus
Lehener Strasse 38
D-7800 Freiburg(DE)

(54) Filmförmige elektrisch leitfähige Polymere.

(57) Filmförmige elektrisch leitfähige Polymere auf der Basis von aromatischen Kohlenwasserstoffen oder 5-oder 6-gliedrigen Heterocyclen mit einem konjugierten π-Elektronensystem und Stickstoff, Sauerstoff oder Schwefel als Heteroatomen und/oder Anilin, erhältlich durch elektrochemische Polymerisation der Monomeren in polaren aprotischen Lösungsmitteln, wobei das Lösungsmittel 0,05 - 1,0 mol/l eines Amids einer aliphatischen Carbonsäure mit bis zu 8 C-Atomen und/oder aromatischen Carbonsäure enthält.

EP 0 263 297 A2

## Filmförmige elektrisch leitfähige Polymere

Die Erfindung betrifft filmförmige elektrisch leitfähige Polymere auf der Basis von aromatischen Kohlenwasserstoffen, 5-oder 6-gliedrigen Heterocyclen mit einem konjugierten p-Elektronensystem und Stickstoff, Sauerstoff oder Schwefel als Heteroatomen und/oder Anilin, erhältlich durch elektrochemische Polymerisation der Monomeren in polaren aprotischen Lösungsmitteln, wobei das Lösungsmittel 0,05 - 1,0 mol/l eines Amids einer aliphatischen Carbonsäure mit bis zu 8 C-Atomen und/oder eines Amids einer aromatischen Carbonsäure enthält.

Außerdem betrifft die Erfindung ein Verfahren zur Herstellung derartiger Polymerer und deren Verwendung zur Herstellung von Elektrodenmaterialien, als Schaltelemente und zur antistatischen Ausrüstung sowie Elektroden für Sekundärzellen, die derartige Polymere als wesentliche Komponente enthalten.

Die elektrochemische Polymerisation von Pyrrol in polaren aprotischen Lösungsmitteln wurde erstmals von Diaz und Kanazawa (J. Chem. Soc. Chem. Comm. 1979, 635) beschrieben. Als Lösungsmittel verwendeten diese Autoren Acetonitril mit einem Wassergehalt von 1 Gew.%, entsprechend einer Konzentration von 0,5 M.

Kürzlich berichteten A.J. Downard und D. Pletcher (J. Electroanal. Chem. 206, 139 (1986)) über systematische Untersuchungen des Einflusses von Wasser als Zusatz bei der elektrochemischen Polymerisation von Pyrrol in Acetonitril.

Die nach den beiden Verfahren erhältlichen wasserhaltigen Polymerfilme sind jedoch hinsichtlich der Langzeitstabilität, insbesondere bei der Verwendung als Elektrodenmaterialien in Sekundärelementen nicht zufriedenstellend, da das Wasser durch chemische Reaktion mit dem gebildeten Polypyrrol dieses allmählich zersetzt.

Auch Zusätze bestimmter Basen zu den Lösungsmitteln wurden diskutiert (J. Bargon, S. Mohmand, R.J. Waltman, IBM-Res. Rep. RJ 3704 (1982)), die sich jedoch als nachteilig, insbesondere hinsichtlich der Wachstumsgeschwindigkeit der Polymerfilme, erwiesen.

Im europäischen Patent 99 055 wird ein Verfahren zur Herstellung von filmförmigen Polymeren von Pyrrolen beschrieben, wobei sich das durch anodische Oxidation in Gegenwart von Leitsalzen gebildete Polymere filmförmig auf einer flächigen Anode abscheidet. Ausweislich Spalte 3 sind als Lösungsmittel polare organische Lösungsmittel geeignet, die ggf. bis zu 10 Gew.% Wasser enthalten können. Auch diese Filme sind wegen ihres Wassergehalts aus den zuvor genannten Gründen nicht voll zufriedenstellend.

Aufgabe der vorliegenden Erfindung war es daher, elektrisch leitfähige filmförmige Polymere zur Verfügung zu stellen, die auf einfache Weise herstellbar sind und die vorstehend geschilderten Nachteile nicht aufweisen.

Diese Aufgabe wird erfindungsgemäß gelöst durch die eingangs definierten filmförmigen elektrisch leitfähigen Polymeren.

Bevorzugte Ausführungsformen der Erfindung sind der nachfolgenden detaillierten Beschreibung und den Unteransprüchen zu entnehmen.

Die erfindungsgemäßen filmförmigen elektrisch leitfähigen Polymeren leiten sich von Monomeren aus der Gruppe der aromatischen Kohlenwasserstoffe, der 5-und 6-gliedrigen Heterocyclen mit einem konjugierten $\pi$-Elektronensystem und Stickstoff, Sauerstoff oder Schwefel als Heteroatomen und/oder Anilin ab. Als Beispiele seien hier Benzol, Naphthalin, Anthracen, Furan, Thiophen oder Pyrrol sowie deren Derivate genannt. Von den Pyrrolen eignet sich z.B. das unsubstituierte Pyrrol selbst, aber auch N-substituierte Pyrrole wie N-Alkylpyrrole. Auch C-substituierte Pyrrole, wie an C-3 und/oder C-4 C--C$_4$-Alkyl oder chlorsubstituierte Derivate können eingesetzt werden. Bei der Verwendung von Mischungen aus substituierten und unsubstituierten Pyrrolen beträgt der Anteil des unsubstituierten Pyrrols im allgemeinen 50-99 Mol%.

Von den Verbindungen aus der Klasse der Thiophene seien insbesondere das unsubstituierte Thiophen sowie 2-und/oder 3-Alkylthiophene wie 2,3-Diethylthiophen genannt.

Neben den bereits erwähnten aromatischen Kohlenwasserstoffen Benzol, Naphthalin und Anthracen seien hier noch polycyclische Kohlenwasserstoffe wie Diphenyl und Terphenyl genannt. Bevorzugt werden Benzol und Diphenyl.

Auch beliebige Mischungen der vorstehend genannten Monomere sind geeignet. Bevorzugt werden Pyrrol und dessen Derivate sowie Thiophen und dessen Alkylderivate wie 2,3-Dimethyl-oder Diethylthiophen. Wesentlich ist, daß die erfindungsgemäßen filmförmigen Polymere einen Gehalt an Amiden von aliphatischen Carbonsäuren mit bis zu 8 C-Atomen und/oder Amiden von aromatischen Carbonsäuren aufweisen, der den Filmen eine bessere Langzeitstabilität, insbesondere bei der Verwendung als Elektrodenmaterialien in elektrochemischen Sekundärelementen verleiht. Ob diese Amide in chemisch oder physikalisch gebundener Form in den Polymeren vorliegen, ist noch nicht eindeutig geklärt.

Diese Amide werden dadurch in die filmförmigen elektrisch leitfähigen Polymere eingebaut, daß man dem bei der elektrochemischen Polymerisation verwendeten Lösungsmittel 0,05 - 1 mol/l, insbesondere 0,05 - 0,5 und besonders bevorzugt 0,05 - 0,4 mol/l des entsprechenden Säureamids zusetzt. Die Konzentrationsangaben sind dabei so zu verstehen, daß sich in der Lösung, in der die Polymerisation durchgeführt wird, nach der Zugabe des Amids eine Amidkonzentration in den oben genannten Bereichen ergibt.

Beispiele solcher Säureamide sind Formamid, Acetamid, Propionamid und Benzamid sowie deren am N-Atom mono-oder disubstituierten $C_1$-$C_8$-Alkyl-, Alkoxy-oder Arylderivate sowie Chlorderivate. Im allgemeinen sind die monosubstituierten Derivate den disubstituierten vorzuziehen. Besonders bevorzugt sind N-Methylderivate der vorstehend genannten Amide. Als vorteilhaft hat sich in vielen Fällen herausgestellt, Amide mit möglichst hohen Dielektrizitätskonstanten einzusetzen.

Das erfindungsgemäße Verfahren zur Herstellung von filmförmigen elektrisch leitfähigen Polymeren auf der Basis von aromatischen Kohlenwasserstoffen oder 5-oder 6-gliedrigen Heterocyclen mit einem konjugierten $\pi$-Elektronensystem und Stickstoff, Sauerstoff oder Schwefel als Heteroatomen und/oder Anilin durch elektrochemische Polymerisation der Monomeren in wasserfreien aprotischen polaren Lösungsmitteln ist dadurch gekennzeichnet, daß man dem Lösungsmittel 0,05 - 1 mol/l eines Amids einer aliphatischen Carbonsäure mit bis zu 8 C-Atomen und/oder eines Amids einer aromatischen Carbonsäure zusetzt.

Vorzugsweise werden 0,05 - 0,5 mol/l und insbesondere 0,05 - 0,4 mol/l des Amids zugegeben. In diesen Konzentrationsbereichen wird eine sehr hohe Filmbildungsgeschwindigkeit erzielt, die mehrere hundert Mal höher sein kann als unter gleichen Bedingungen ohne den Zusatz der Amide, so daß das erfindungsgemäße Verfahren auch eine verbesserte Produktivität im Vergleich zu den bekannten Verfahren mit sich bringt.

Die Zyklisierbarkeit, die für die Anwendung in Sekundärelementen wichtig ist, ist gegenüber wasserhaltigen Filmen deutlich verbessert, ohne daß Abstriche bei der Beladungshöhe gemacht werden müßten. Diese liegt - wie bei den wasserhaltigen Filmen - im allgemeinen im Bereich von 10 - 100 Ah/kg, vorzugsweise 50 - 100 Ah/kg.

Ein weiterer Vorteil des erfindungsgemäßen Verfahrens ist darin zu sehen, daß die eingesetzten Amide bei der anodischen Oxidation weniger reaktiv sind als das üblicherweise eingesetzte Wasser. Dies erlaubt es, höhere Stromdichten bzw. größere Formierungspotentiale anzuwenden.

Geeignete Monomere und Amide wurden vorstehend bereits beschrieben, weshalb hier nicht ausführlich darauf eingegangen wird.

Zur Herstellung der filmförmigen Polymere werden die Monomeren in einem Elektrolyt-Lösungsmittel, vorzugsweise in Gegenwart eines geeigneten Leitsalzes anodisch oxidiert und dabei polymerisiert. Die Monomer-Konzentration beträgt hierbei üblicherweise etwa 0,01 - 2 mol/l, vorzugsweise 0,05 - 1 mol/l und insbesondere 0,1 - 0,5 mol/l Lösungsmittel. Da in dem erfindungsgemäßen Verfahren, wenn dieses kontinuierlich durchgeführt wird, die Konzentration der Monomeren und des Leitsalzes in der Elektrolyt-Lösung bei hinreichend langer Elektrolyse-Dauer allmählich abnimmt, kann die Elektrolyt-Lösung im Bedarfsfall auch aufgefrischt werden, d.h. es können frische Monomeren, Amide und/oder Leitsalz während der Elektrolyse nachdosiert werden. Dies geschieht am besten durch Umpumpen der Elektroyt-Lösung und Zudosieren der Monomeren, der Amide und/oder des Leitsalzes in dem gewünschten Maße außerhalb der eigentlichen Elektrolysevorrichtung. Es sei jedoch hervorgehoben, daß für das erfindungsgemäße kontinuierliche Verfahren und die Herstellung von einheitlichen gleichförmigen Polymer-Filmen die Konzentration an Monomeren und/oder Leitsalz in der Elektrolyt-Lösung nicht zwingendermaßen konstant gehalten werden muß, so daß das erfindungsgemäße Verfahren in einem einfachen geschlossenen Elektrolysegefäß ohne Umlauf der Elektrolyt-Lösung durchgeführt werden kann.

Als Elektrolyt-Lösungmittel können in dem erfindungsgemäßen Verfahren die für die elektrochemische Polymerisation an sich bekannten und üblichen polaren aprotischen organischen Lösungsmittel, die die Monomeren und das Leitsalz zu lösen vermögen, eingesetzt werden. Bevorzugte organische Elektrolyt-Lösungsmittel sind z.B. Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, Nitromethan, $SO_2$, N-Methylpyrrolidon und Propylencarbonat sowie Gemische dieser Lösungsmittel. Vorzugsweise wird das erfindungsgemäße Verfahren in Gegenwart von Leitsalzen durchgeführt.

Als Leitsalze können die für die elektrochemische Polymerisation an sich bekannten und üblichen ionischen oder ionisierbaren Verbindungen eingesetzt werden, insbesondere solche mit Anionen starker, oxidierender Säuren oder von gegebenenfalls mit Alkyl-und/oder Nitro-Gruppen substituierten Aromaten mit sauren Gruppen. Bevorzugte Leitsalze enthalten als Kationen die Alkalimetall-Kationen, insbesondere $Li^+$, $Na^+$, oder $K^+$, die $NO^+$-und $NO_2^+$-Kationen oder Onium-Kationen, vor allem des Stickstoffs und des Phosphors,

etwa des Typs $R_4N^+$ und $R_4P^+$, worin die Reste R unabhängig voneinander Wasserstoffatome, niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeuten. Beispielhaft für derartige Onium-Kationen seien das Tetramethylammonium-, das Tetraethylammonium-, das Tri-n-butylammonium, das Tetra-n-butylammonium, das Triphenylphosphonium-und das Tri-n-butylphosphonium-Kation genannt. Als Anionen für die Leitsalze haben sich $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ als besonders günstig erwiesen. Bei einer weiteren Gruppe von Leitsalzen leiten sich die Anionen von Aromaten mit sauren Gruppen ab. Hierzu gehören neben dem $C_6H_5COO^-$-Anion insbesondere die Anionen von gegebenenfalls mit Alkylgruppen substituierten aromatischen Sulfonsäuren. Besonders bevorzugt sind Leitsalze, die das Benzolsulfonat-oder Tosylat-Anion enthalten. In einer weiteren sehr günstigen Ausführungsform können die Aromaten mit sauren Gruppen auch noch mit Nitro-Gruppen substituiert sein. Zu den Leitsalzen auf Basis dieser sauren Nitroaromaten zählen z.B. die Salze von Nitrophenolen, von Nitrogruppen-substituierten aromatischen Carbonsäuren und von Nitrogruppen-substituierten aromatischen Sulfonsäuren. Insbesondere können auch die Salze von Nitro-, Dinitro-, und Trinitrophenolen, Nitro-, Dinitro-und Trinitro-benzoesäuren sowie Nitro-, Dinitro-und Trinitro-benzolsulfonsäuren Einsatz finden.

Die Leitsalzkonzentration bei der Durchführung des erfindungsgemäßen Verfahrens beträgt im allgemeinen 0,001 bis 1, vorzugsweise 0,01 bis 0,5 mol pro Liter.

Das erfindungsgemäße Verfahren kann in einer elektrolytischen Zelle oder Elektrolyse-Apparatur, bestehend aus einer Zelle mit oder ohne Diaphragma, einer Kathode, einer Anode und einer externen Gleichstromquelle, durchgeführt werden.

Entsprechende Vorrichtungen sind an sich bekannt und in der Literatur beschrieben. Für kontinuierliche Herstellungsverfahren haben sich insbesondere die in der EP-A 99 055 beschriebenen Vorrichtungen als vorteilhaft erwiesen.

Die Reaktionstemperatur, bei der das erfindungsgemäße Verfahren durchgeführt wird, hat sich als unkritisch erwiesen, so daß sie in einem breiten Bereich variiert werden kann, solange die Erstarrungs-bzw. Siedetemperatur des Elektrolyt-Lösungsmittels nicht unter-bzw. überschritten wird.

Im allgemeinen hat sich eine Reaktionstemperatur in Bereich von -40 bis + 40°C als sehr vorteilhaft erwiesen, wobei normalerweise bei Raumtemperatur gearbeitet wird. Es ist zwar nicht notwendig, kann jedoch vorteilhaft sein, wenn die Elektrolyse unter Inertgas durchgeführt wird. Die Elektrolyt-Lösung kann während der Elektrolyse gerührt werden. Als vorteilhaft hat sich das Umpumpen der Elektrolyt-Lösung erwiesen, wobei definierte Arbeitstemperaturen über einen Thermostaten erreicht werden.

Im übrigen können in dem erfindungsgemäßen Verfahren die für die elektrochemische POlymerisation der genannten Monomeren üblichen und bekannten Bedingungen angewandt werden. Für die Stromdichte haben sich Werte in Bereich von 0,5 bis 100 mA/cm², vorzugsweise im Bereich von 1 bis 50 mA/cm², als besonders vorteilhaft erwiesen. Dabei stellen sich, je nach Aufbau der zur Polymerisation verwendeten Zelle, Spannungswerte von im allgemeinen 1 - 50 V, insbesondere von 2 - 20 V ein. Diese Angaben gelten insbesondere für Pyrrolpolymere.

Mit dem erfindungsgemäßen Verfahren können selbsttragende Filme unterschiedlicher Schichtstärke hergestellt werden. Im allgemeinen liegt die Dicke der erhaltenen Filme im Bereich von 10 bis 100 μm. Die Filmdicke kann dabei sowohl durch die Verweilzeit des anodenaktiven Materials in der Elektrolyt-Lösung als auch insbesondere über die Stromdichte variiert und eingestellt werden. Die erhaltenen Filme der Polymeren der Pyrrole können zur Entfernung von anhaftendem Leitsalz mit Lösungsmitteln gewaschen und bei Temperaturen von 30 bis 150°C, vorzugsweise unter Vakuum, getrocknet werden. Die Filme lassen sich anschließend in jeder gewünschten Form weiterverarbeiten und für die verschiedensten Anwendungen einsetzen, z.B. bei der Herstellung von Elektroden, Schaltern, Abschirmmaterialien und anderem, sowie zur antistatischen Ausrüstung von Kunststoffen.

Beispiel

Eine 0,1 molare Lösung von Pyrrol in wasserfreiem Acetonitril, die als Leitsalz 0,2 mol/l Tetrabutylammoniumhexafluorophosphat enthielt und die weiterhin 0,15 mol/l N-Methylformamid zugesetzt enthielt, wurde in eine mit einem Diaphragma geteilte Elektrolyse-Apparatur eingebracht. Die Lösung wurde potentiostatisch bei + 1,4 Volt vs. Ag/AgCl bzw. galvanostatisch mit einer Stromdichte von 1,5 mA/cm² elektrolysiert. An der Anode aus Pt bildete sich ein glatter tiefdunkelbrauner Film. Nach 20 Minuten wurde der Vorgang unterbrochen und der Film von der Elektrode abgelöst. Der Film war flexibel und mechanisch sehr stabil. Bei Cyclisierungsexperimenten wurde er bis 75 Ah/kg reversibel aufgeladen.

## Ansprüche

1. Filmförmige elektrisch leitfähige Polymere auf der Basis von aromatischen Kohlenwasserstoffen oder 5-oder 6-gliedrigen Heterocyclen mit einem konjugierten π-Elektronensystem und Stickstoff, Sauerstoff oder Schwefel als Heteroatomen und/oder Anilin, erhältlich durch elektrochemische Polymerisation der Monomeren in polaren aprotischen Lösungsmitteln, wobei das Lösungsmittel 0,05 - 1,0 mol/l eines Amids einer aliphatischen Carbonsäure mit bis zu 8 C-Atomen und/oder eines Amids einer aromatischen Carbonsäure enthält.

2. Verfahren zur Herstellung von filmförmigen elektrisch leitfähigen Polymeren auf der Basis von aromatischen Kohlenwasserstoffen oder 5-oder 6-gliedrigen Heterocyclen mit einem konjugierten π-Elektronensystem und Stickstoff, Sauerstoff oder Schwefel als Heteroatomen, und/oder Anilin durch elektrochemische Polymerisation der Monomeren in polaren, aprotischen Lösungsmitteln, dadurch gekennzeichnet, daß man dem Lösungsmittel 0,05 - 1,0 mol/l eines Amids einer aliphatischen Carbonsäure mit bis zu 8 C-Atomen und/oder eines Amids einer aromatischen Carbonsäure zusetzt.

3. Verfahren nach Anspruch 2, dadurch gekennzeichnet, daß man 0,05 - 0,5 mol/l des Amids zusetzt.

4. Verwendung von filmförmigen elektrisch leitfähigen Polymeren gemäß Anspruch 1 zur Herstellung von Elektroden, Schaltelementen, Leitungs-und Abschirmmaterialien und zur antistatischen Ausrüstung von Kunststoffen.

5. Elektrodenmaterialien in elektrochemischen Sekundärelementen, enthaltend als wesentliche Komponente filmförmige elektrisch leitfähige Polymere gemäß Anspruch 1.